# EUROPEAN PATENT SPECIFICATION

(11) **EP 2 281 850 B1**
(45) Date of publication and mention of the grant of the patent: **18.04.2012**
(21) Application number: 09425321.8
(22) Date of filing: 06.08.2009
(51) Int. Cl.: C08G 77/26, C08G 77/388, C08G 77/452, C08L 83/08, C08L 83/10, C11D 3/00, C11D 3/37, D06M 15/643, D06P 5/00

(54) **Polymers, support comprising said polymers and uses thereof as dyes capturing and bactericidal agents**
Polymere, Träger mit den Polymeren und Verwendungen davon als farbaufnehmende und bakterizide Wirkstoffe
Polymères, support comprenant lesdits polymères et leurs utilisations en tant qu'agents bactéricides et capturant les colorants

(43) Date of publication of application: 09.02.2011
(73) Proprietor: Siate S.r.l., 35020 Maserà di Padova (PD) (IT); Zanolo S.p.A., 13031 Arborio (VC) (IT)
(72) Inventor: Dionisi, Carlo, 35020 Maserà di Padova (Padova) (IT); Barison, Martina, 35020 Maserà di Padova (Padova) (IT); Novello, Andrea, 13031 Arborio (Vercelli) (IT); Tonani, Alberto, 13031 Arborio (Vercelli) (IT)
(74) Representative: Freyria Fava, Cristina

(56) References cited:
- WO-A1-2008/119832
- DE-A1-102005 036 602
- DE-A1-102005 056 864
- US-A- 5 952 438
- US-A1- 2007 212 326

## Description

### FIELD OF THE INVENTION

The present invention refers to new polymers, a support to which at least one of such polymers is attached and to the use of the new polymers and the support as means for capturing dyes dispersed in an aqueous environment. In particular, the present invention refers to the use of such polymers and such support for capturing fabric dyes released into the washing environment by dyed textile articles, such as for example dyed clothes and fabrics.

### Prior art

It is known in the art that during the step of washing in an aqueous environment dyed textile articles release into the washing environment dyes that may be transferred from an article to another damaging the articles themselves.

This release of dyes has required, in the past, separate washing of dyed textile articles from white textile articles and, even more, the separation of the dyed textile articles according to the predominating dye therein, in order to prevent transfer of dye/s from one article to another. Thus all this implied waste of time, but above all waste of energy and more environmental pollution due to the increase of the washing cycles to be carried out.

To overcome this drawback developed and sold over the years have been products which, upon introduction into the washing environment, have the capacity of capturing dyes dispersed in the washing environment in such a manner to prevent the deposit of such dyes dispersed on various articles present in the washing environment.

*Patent documents* WO-A-2008/119832*,* US-A-2007/212326 *and* US-A-5 952 438 *disclose polymeric compounds for colour transfer inhibition.*

Though such products allowed overcoming the drawback regarding washing white and dyed textile articles together, there still arises the need to have products with improved capacity to capture dyes dispersed in an aqueous washing environment, as well as processes for producing such products being more efficient and less expensive and possibly with lower environmental impact, in terms of by-products of the compounds intended to capture the dyes, which must be treated as special wastes.

### SUMMARY OF THE INVENTION

Therefore, there arises the need for improved solutions capable of providing products with an improved capacity to capture dyes and capable of allowing using processes for producing such products that are more efficient, less expensive and possibly with lower environmental impact.

The object of the present invention is to provide such improved solutions.

According to the present invention, the above mentioned object is attained due to the matter specifically referred to in the claims that follow, which form an integral part of the present invention.

An embodiment of the invention provides new polymers of formula (I), which help capturing dyes dispersed in an environment for washing dyed textile articles in a more efficient manner: 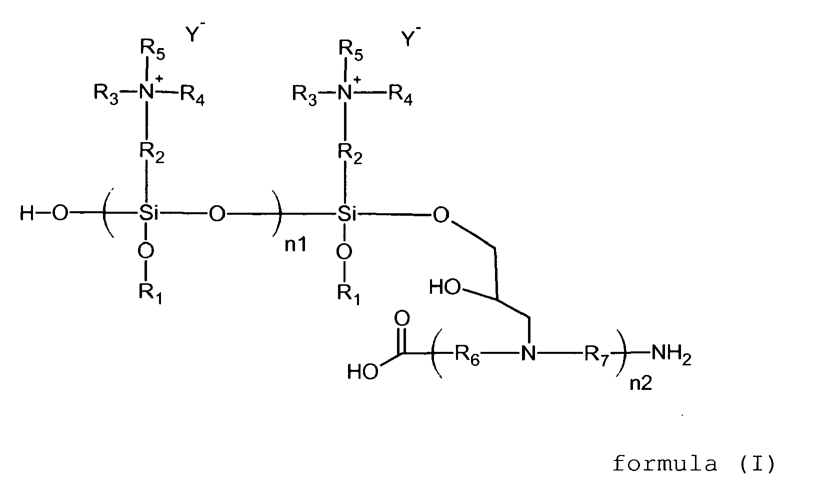 wherein:
R₁ may be hydrogen, a methyl, ethyl, acetyl group preferably a methyl group;
R₂ may be a linear or branched alkyl group C₁₋₆, preferably a propyl group;
R₃ and R₄ may be, independently from each other, a linear or branched C₁₋₃ alkyl group, preferably a methyl group;
R₅ may be a linear and/or branched alkyl and/or alkenyl group C₁₋₂₂, substituted or unsubstituted, preferably a linear and/or branched group C₁₆₋₁₈, substituted or unsubstituted;
R₆ and R₇ may be, independently from each other, a linear and/or branched alkyl and/or alkenyl group C₄₋₂₀, containing within the alkyl or alkenyl chain at least one group selected from among -HN-(CO)-, -NH-, -N⁺-, R₆ and R₇ are preferably -(CH₂)₄-N⁺-(CH₂)₄-NH-CO-(CH₂)₄-;
Y⁻ may be a chloride, bromide, sulphate, sulfonate, preferably chloride;
n1 may acquire a value comprised between 1 and 1000, preferably between 1 and 100, more preferably between 1 and 15;
n2 may acquire a value comprised between 1 and 1000, preferably between 1 and 100, more preferably between 1 and 20.

A further embodiment of the present invention concerns a fibre-based support to which polymers of formula (I) and/or copolymers containing polymers of formula (I) are conjugated.

Such polymer compounds and such support are advantageously useable for capturing dyes dispersed in an aqueous environment, preferably during a step for washing dyed textile articles, and also have bactericidal activity.

Another embodiment of the present invention concerns a process for producing a fibre-based support impregnated with the polymers of formula (I) and/or copolymers containing polymers of formula (I) which provides for:
a) providing fibres containing free hydroxyl groups;
b) carding said fibres obtaining at least one layer of carded fibres;
c) impregnating said layer of carded fibres with at least one polymer of formula (I) and/or at least one copolymer containing at least one polymer of formula (I), in such a manner to obtain a fibre-based support impregnated with at least one polymer of formula (I) and/or at least one copolymer containing at least one polymer of formula (I).

### BRIEF DESCRIPTION OF THE DRAWINGS

Now, the invention shall be described, purely for exemplifying purposes, with reference to the figures of the attached drawings, wherein:
- figure 1 shows a diagram of a plant for producing a support according to the present invention;

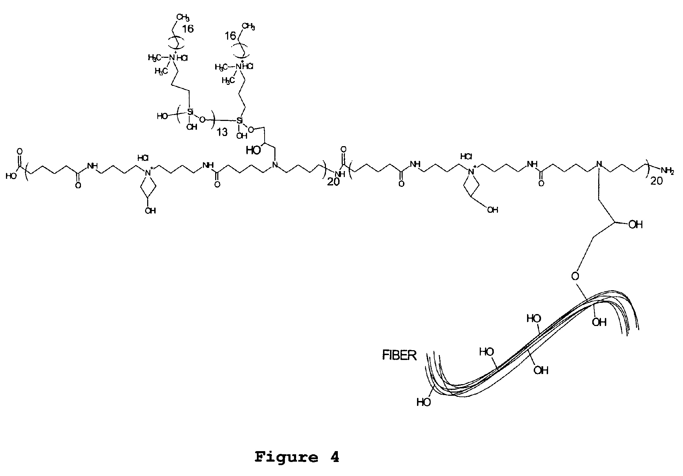

- figures 2 - 4 illustrate the chemical structures of polymers of formula (I), (II) and (III), respectively;
- figure 5 illustrates the reaction diagram for the production of the polymer of formula (I);
- figure 6 illustrates the reaction diagram for the conjugation of the polymer of formula (I) to fibres of a support;
- figure 7 illustrates the chemical structure of a textile dye.

### DETAILED DESCRIPTION OF SOME EMBODIMENTS

Provided in the following description, are various specific details for complete understanding of the embodiments. The embodiments may be obtained without one or more of the specific details, or through other processes, components, materials, etc. In other cases, widely known structures, materials or operations are not shown or described in detail to avoid obscuring aspects of the embodiments.

Over the entire description, reference to "an embodiment" is used to indicate that a particular aspect, structure, or characteristic described regarding the embodiment is included in at least one embodiment. Hence, the use of the expression "in an embodiment" in various points over this description does not necessarily refer to the same embodiment. Furthermore, the particular aspects, structures, or characteristics may be combined in any convenient manner into one or more embodiments.

References provided herein are solely for the sake of convenience and do not interpret the object or meaning of the embodiments.

An embodiment of the present invention concerns the development of new polymers, which - according to the specific chemical formula - allow capturing the dyes dispersed in the washing environment in a more efficient manner. In particular, the polymers subject of the present invention are characterised by the chemical structure illustrated in the formula (I): 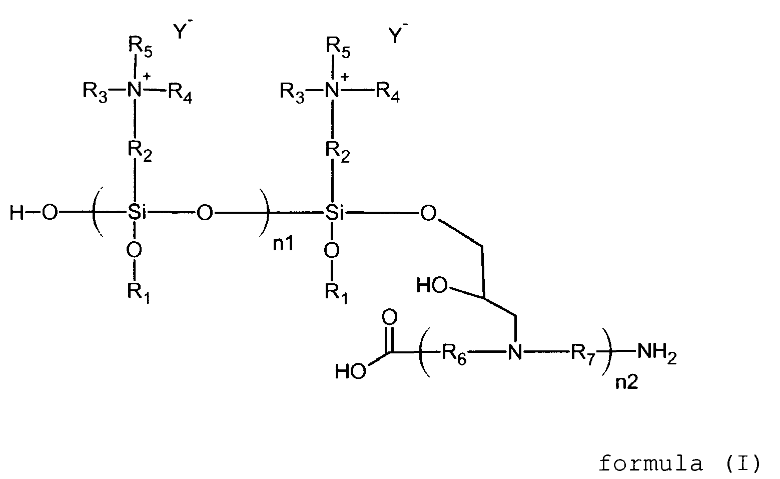 wherein:
R₁ may be hydrogen, a methyl, ethyl, acetyl group preferably a methyl group;
R₂ may be a linear or branched alkyl group C₁₋₆, preferably a propyl group;
R₃ and R₄ may be, independently from each other, a linear or branched alkyl group C₁₋₃, preferably a methyl group;
R₅ may be a linear and/or branched alkyl and/or alkenyl group C₁₋₂₂, substituted or unsubstituted, preferably a linear and/or branched group C₁₆₋₁₈, substituted or unsubstituted;
R₆ and R₇ may be, independently from each other, a linear and/or branched alkyl and/or alkenyl group C₄₋₂₀, containing within the alkyl or alkenyl chain at least one group selected from among -HN-(CO)-, -NH-, -N⁺-, R₆ and R₇ are preferably -(CH₂)₄-N⁺-(CH₂)₄-NH-CO-(CH₂)₄-;
Y⁻ may be a chloride, bromide, sulphate, sulfonate, preferably chloride;
n1 may acquire a value comprised between 1 and 1000, preferably between 1 and 100, more preferably between 1 and 15;
n2 may acquire a value comprised between 1 and 1000, preferably between 1 and 100, more preferably between 1 and 20.

From a chemical point of view the polymer of formula (I) was synthesized in such a manner to obtain - at molar level - a greater amount of quaternary ammonium atoms (-N⁺-) with respect to the initial polyamine represented by the formula (II): 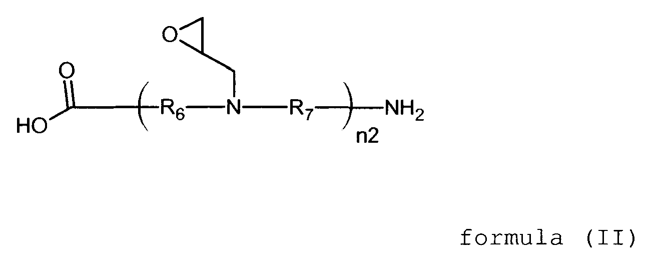 wherein groups R₆ and R₇ and number n2 acquire the definitions indicated above related to the formula (I).

Increasing the quaternary ammonium atoms in the polymer of formula (I) allowed increasing the capacity of the polymer (I) and of the support to which this polymer is attached to attract the dyes. As a matter of fact, it should be borne in mind that the textile dyes released by the dyed textile articles, such as for example clothes or pieces of fabric, are generally negatively charged and, hence, attracted by a compound with opposite charge, such as the compound of formula (I), where the quaternary ammonium atoms serve as "capturing sites" for the dyes.

The polymer compound of formula (I) when placed in contact with a support having free hydroxyl groups, such as for example cellulosic fibres, is capable of being conjugated thereto by means of covalent bonds with such hydroxyl groups.

In a further preferred embodiment of the present invention, provided for is the reaction- in presence of a fibre-based support containing free hydroxyl groups (indicated with Fiber-O) - of the polymer of formula (I) with the polyamine of formula (II) generating a copolymer of formula (III) having a number of capture sites (quaternary ammonium atoms) even greater than the compound of formula (I), with a further improved capacity to capture dispersed dyes: 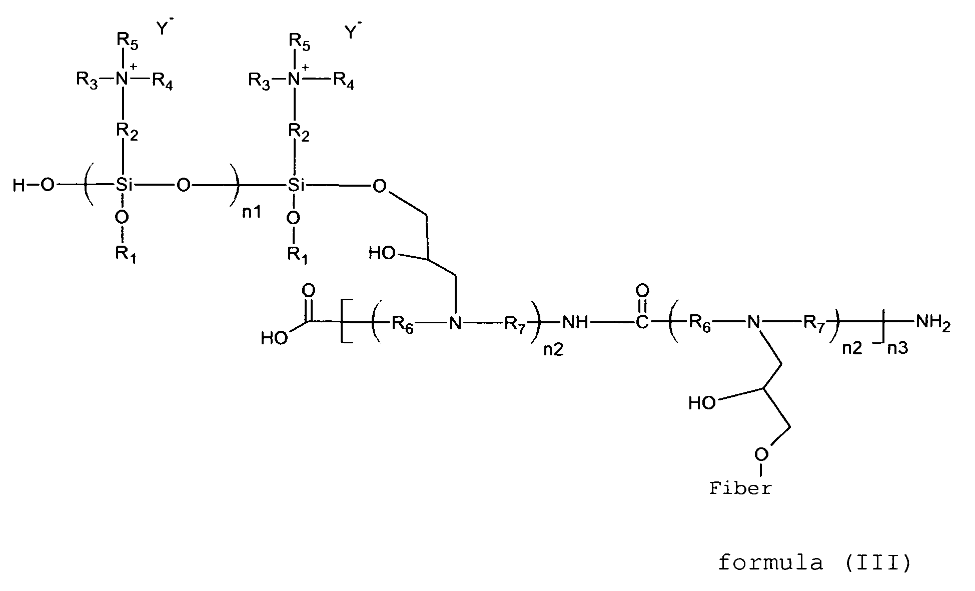 wherein groups R₁ to R₇ and numbers n1 and n2 have the meanings indicated above related to the formula (I), n3 may acquire a value comprised between 1 and 10.

From a biological point of view, the polymer of formula (I) has an antibacterial activity, i.e. it is capable of capturing gram negative and gram positive bacteria through attraction between the bacterial cellular membrane (negatively charged) and the polymer (positively charged) and destroying them using an ionic/physical mechanism (reference shall be made to ASTM 2149-01 reference standard). Particularly preferable as polymers with antibacterial activity are, polymers of formula (I) and/or copolymers of formula (III) wherein alkyl groups attached to silanol groups have a chain with 16-18 carbon atoms.

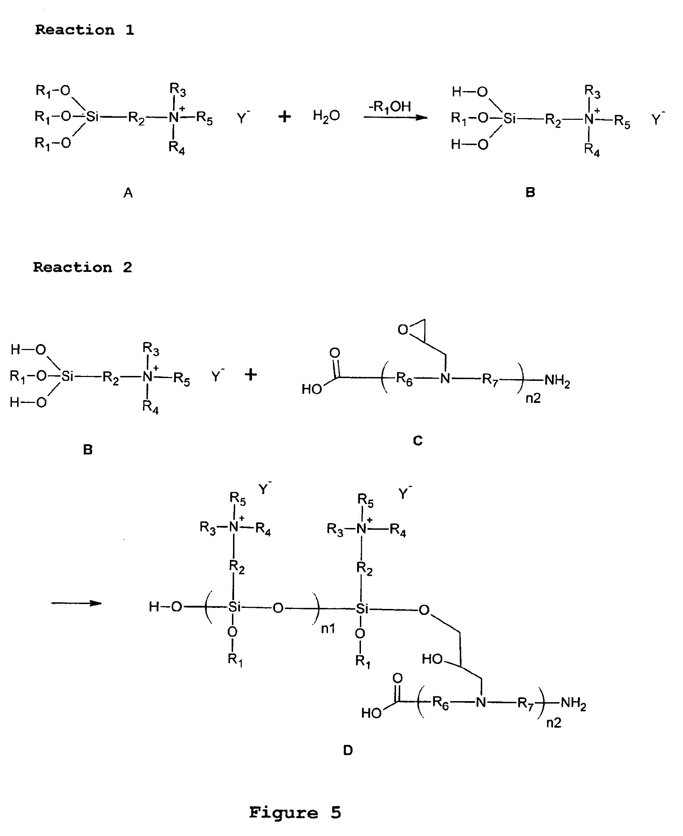

The process of synthesis of the polymers of formula (I) (schematised in figure 5) essentially provides for the reaction of a silanol compound (compound B of figure 5) with a polyamine of formula (II) (compound C of figure 5).

In the first step (Reaction 1), a silanol compound containing terminal alkoxyl groups R₁O- (indicated with A in figure 5) is subjected to a hydrolysis reaction with formation of compound B, in which two of the three R₁O- groups on the silicon atom are replaced with two OH- groups (Reaction 1).

In the second step (Reaction 2), the two hydroxyl groups present on the silanol compound B allow - in an aqueous environment - that there initially occurs a homopolymerization reaction between at least two, preferably between 4 and 15, silanol compounds B and subsequently the conjugation of the formed silanol homopolymer to the polyamine with formation of the polymer D, i.e. the polymer of formula (I).

The reaction between the silanol homopolymer and the polyamine occurs due to the presence of an epoxy group on the polyamine C, whose opening allows the formation of a covalent bond between the silanol homopolymer and the polyamine. The reaction occurs at a temperature comprised between 30-70 °C in presence of a catalyst (for example amidine derivative) capable of accelerating the reaction of nucleophilic addition between the two polymers.

The bond created between the silanol homopolymer and the polyamine is a covalent bond resistant to hydrolysis in an alkaline environment even at high temperatures and thus allows, the use of the polymer of formula (I) as an agent for capturing textile dyes released by dyed textile articles when subjected to washing, an operation which usually occurs in an alkaline aqueous environment at a high temperature.

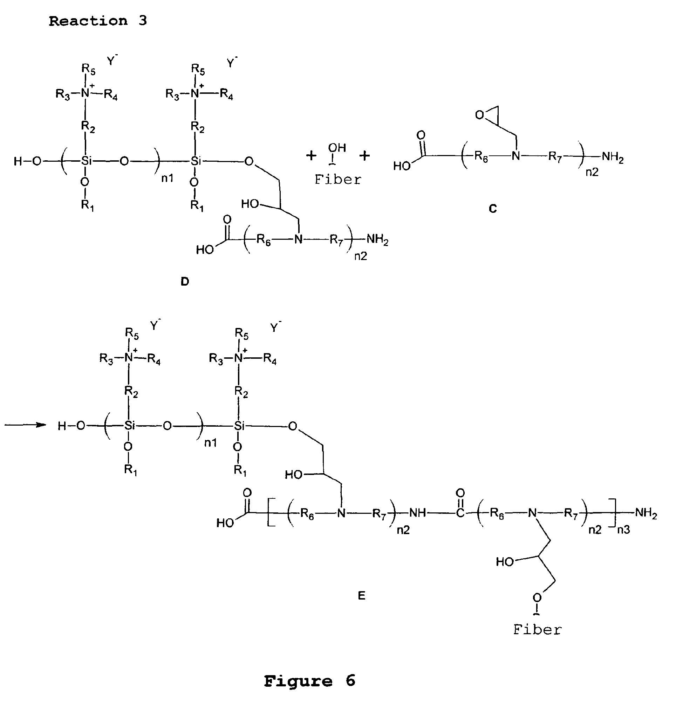

The synthesis of the copolymer of formula (III) shall now be described generally with reference to the reaction diagram illustrated in figure 6. The copolymer of formula (III) (compound E) is obtained by reacting the polymer of formula (I) (compound D) with the polyamine of formula (II) (compound C) at a temperature comprised between 100 and 250 °C, preferably between 120 and 170 °C.

Represented in figure 6 is the reaction diagram in presence of a support made up of fibres containing free hydroxyl groups. The conjugation of the compound of formula (III) to the support occurs through the breaking of the epoxy group present on the polyamine C with ensuing formation of a C-O-C bond with the hydroxyl group of the fibre.

Such bond - analogously to the bond between the silanol homopolymer and the polyamine C - has a high resistance to hydrolysis in an alkaline environment even at high temperatures and thus allows, the use of such support as an means for capturing dyes dispersed in an aqueous environment (for example in a washing environment), where such dyes were released by dyed textile articles.

Provided hereinafter are two examples (example I and example II) regarding the synthesis of polymers of formula (I) and copolymers of formula (III).

A further embodiment of the present invention concerns a product for capturing dyes dispersed in an aqueous environment during a step for washing dyed textile articles and the related production process.

The product for capturing dyes dispersed in an aqueous environment comprises the new polymers/copolymers of formula (I) and/or (III) conjugated to a support. The support is preferably made up of natural, artificial, and/or synthetic fibres and/or their mixtures, where such fibres must have free hydroxyl groups for the conjugation of the compounds of formula (I) and/or (III) thereto. Preferred fibres are viscose, cotton, polyester, acrylic, nylon, metaramides. The support is in form of a fabric, nonwoven fabric, loose fibres or yarn.

A particular embodiment provides for that the support be one or more carded layers of nonwoven fabric to which the polymer compounds of formula (I) and/or (III) are conjugated.

According to the present invention the process for producing a product for capturing dyes dispersed in an aqueous environment comprising the new polymer compounds of formula (I) and/or (III) essentially provides for the impregnation of a fibre-based support with such polymer compounds of formula (I) and/or (III).

Reference shall be made hereinafter - strictly for exemplifying purposes - to the production of a fibre-based support for capturing dyes dispersed in an aqueous environment in form of a nonwoven fabric, preferably a carded layer made up of one or more varieties of fibres mixed to each other.

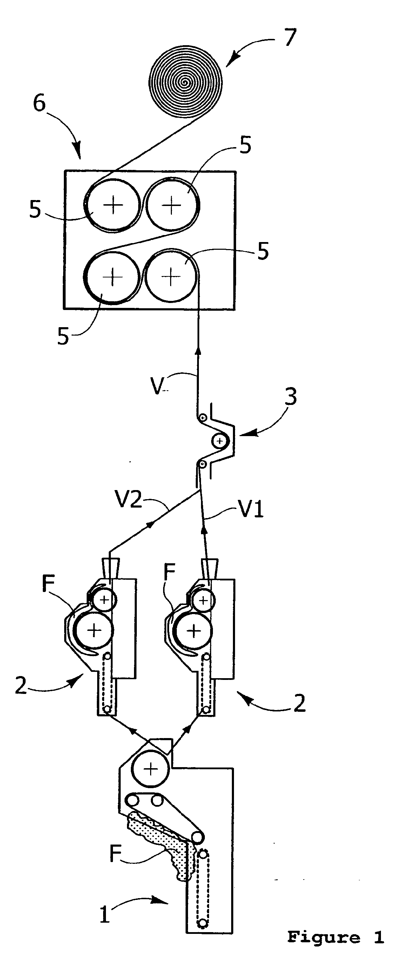

With reference to figure 1, the process provides for a first step 1 of opening the staple fibre bales F.

The fibres have a variable composition, but preferably made up of cellulosic material, such as for example viscose and/or cotton, to which synthetic material, such as for example polyester, acrylic, nylon, metaramide fibres may be added.

Such fibres F are subjected to a pre-opening process and are dosed in the desired ratios and subsequently pneumatically sent to a finer opening and mixing system (not illustrated).

Such fibres F are subsequently subjected to carding 2, by means of a carding machine. Preferably, two carded layers V1 and V2 having desired grammage are produced, such layers forming a single layer V once overlapped.

The layer V is subjected to impregnation 3 by means of an impregnating machine in a vat containing the polymer compound of formula (I), (II) and/or (III).

Inside the impregnating machine, a suctioning device operating under vacuum (not illustrated) is used to create an approximately 20 mm water depression, by means of which the amounts of polymer compounds of formula (I), (II) and/or (III) to be fixed onto the layer V are dosed. It is thus possible to determine the amount of dry polymer attached to the finished layer, where such amount is measured in gr/m².

The layer V with consistency around 60-70% is drawn by means of conveyor belts 5 into an air furnace 6 for drying, where the temperature is maintained between 120-230 °C, preferably 140-200 °C, even more preferably around 170 °C. In case the impregnation solution comprises the polymers of formula (I) and (II), the polymerisation of the polymer compounds of formula (I) and (II) occurs during the drying step obtaining the polymer compounds of formula (III) conjugated to the fibres of the support.

The layer thus impregnated (also defined nonwoven fabric textile support) is wound into a roll 7. After cutting and packaging operations, the support is ready for sale.

The process for producing the support for capturing dyes dispersed in an aqueous environment described above allows verticalising the process and reducing waste disposal costs given that there are no liquid reaction by-products.

Specifically, implementing the process described herein allows continuous production of the final product in only one step, without requiring - as it occurs during normal production techniques - manufacturing the textile substrate, packaging in form of a roll and subsequent impregnation of such roll with the solution containing the active compounds for capturing dyes. Alongside being more expensive, this succession of production steps, does not allow precisely controlling the amount of active compound fixed on the substrate and it is negatively influenced by the impregnation solution which must be disposed of as special waste.

### MATERIALS and PROCESSES

The reagents were purchased at Aldrich, Fluka, Hercules Chemical Corporation Inc. and used as received.

Quantitative chemical analysis were determined in FTIR Bruker Alpha, (ZnSe ATR crystal).

Qualitative mechanical tests of the materials were determined through Acquati model 5/ies load cell 50 g dynamometer and Toniolo model DGTW01B Thickness gauge according to edana 30.4-89 standards.

Qualitative tests to define the absorbing capacity of the dye were performed through Datacolor SF 660 x.

Described hereinafter is the process for producing two polymer compounds of formula (I) (identified as products D1 and D2) with reference to the general reaction diagram illustrated in figure 5, where product A is dissolved in water obtaining product B. Product B is reacted with product C obtaining product D.

### EXAMPLE I. Preparing the polymer of formula (I), wherein R₁, R₃, R₄ and R₅ are methyl, R₂ is propyl, R₆ is- (CH₂)₄-N⁺- (CH₂)₄-NH-CO- (CH₂)₄-, R₇ is - (CH₂)₄-, Y⁻ is chloride, n1= 13 , n2= 20.

### Preparing product B1:

10 Kg of an alcohol solution of n-trimethoxysilylpropyl-n,n,n-trimethyl ammonium chloride (Cas: 35141-36-7), i.e. 19.4 moles of silane, were slowly poured into a cold mixer containing 90 Kg of water at a pH of about 3.5 for acetic acid. The solution was finely dispersed in presence of ethoxylated castor oil 80 miles until a slight opalescence was obtained. Product B1 is ready to be used as it is.

### Preparing product D1:

200 Kg of hexanedioic acid, polymer with n-(2-aminoethyl)- 1,2-ethanediamine and (chloromethyl)xirane 20% aqueous solution (Cas: 25212-19-5) were additivated with 10 Kg of product B1 and 30 gr of 1,8-Diazabicyclo [5.4.0]undec-7-ene (catalyst - Cas: 6674-22-2), the pH was raised to 8 by adding sodium hydroxide 30% aqueous solution, the mixture was heated at 50 °C for 10 min.

Product D1 as obtained is ready to be used in the step of impregnating a fibre-based support.

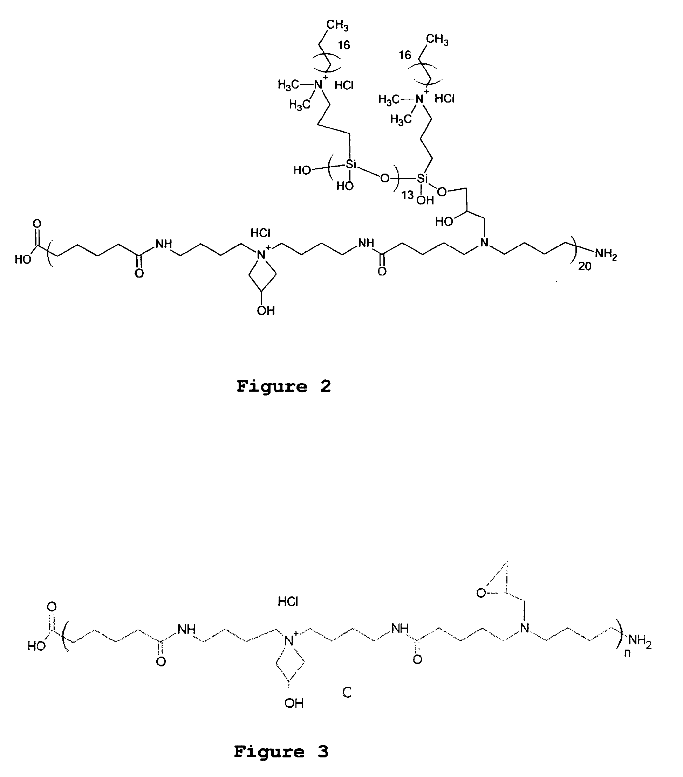

### EXAMPLE II. Preparing the polymer of figure 2.

### Preparing product B2:

10 Kg of an alcohol solution of dimethyl octadecyl[3-(trimethoxysilyl)propyl]ammonium chloride (Cas: 27668-52-6), i.e. 10.1 moles of silane, were slowly poured into a cold mixture containing 70 Kg of water and 20 Kg of ethoxylated castor oil (80 mol) at a pH of about 3.5 for acetic acid. The solution was finely dispersed until a slight opalescence was obtained. Product B2 is ready to be used at it is.

### Preparing product D2:

200 Kg of hexanedioic acid, polymer with n-(2-aminoethyl)- 1,2-ethanediamine and (chloromethyl)xirane 20% aqueous solution (Cas: 25212-19-5) were additivated with 10 Kg of product B2 and 30 gr of 1,8- Diazabicyclo [5.4.0]undec-7-ene (catalyst - Cas: 6674-22-2), the pH was raised to 8 by adding sodium hydroxide 30% aqueous solution, the mixture was heated at 50°C for 10 min.

Product D2 thus obtained is ready to be used in the step of impregnating a fibre-based support.

### EXAMPLE III. Preparing a fibre-based support made of nonwoven fabric

90 Kg of viscose staple fibre are mixed with 10 Kg of polyester until a homogeneous fibrous mass is obtained, at this point the carding allows the opening of the fibres up to the formation of two layers with 25 gr/m² grammage, which - once overlapped - form a single layer of 50 gr/m². The fibre-based support made of nonwoven fabric is now ready for impregnation and the polymerisation process.

### EXAMPLE IV. Impregnation of the fibre-based support with products D1 and D2

The fibre-based support is now impregnated in an aqueous solution at 20% of product D1 or of product D2 in presence of 20% of the polyamine of figure 2, suctioned to eliminate the excess product and placed in an oven at the temperature of 170 °C for 60 seconds. The fibre-based support thus formed is in form of a flat sheet weighing 55 gr/m² and with a thickness of 0.55 mm.

The formed polymer (polymer of formula (III), figure 6) makes the fibre-based support very resistant. The toughness of the support was measured longitudinally and transversely obtaining the following results 8.5 and 2.5 daN/5 cm, respectively.

Fibre-based supports impregnated with polymer compounds E1 and E2 (figure 6)are thus realised.

### RESULTS

### Dispersed dyes capturing capacity test

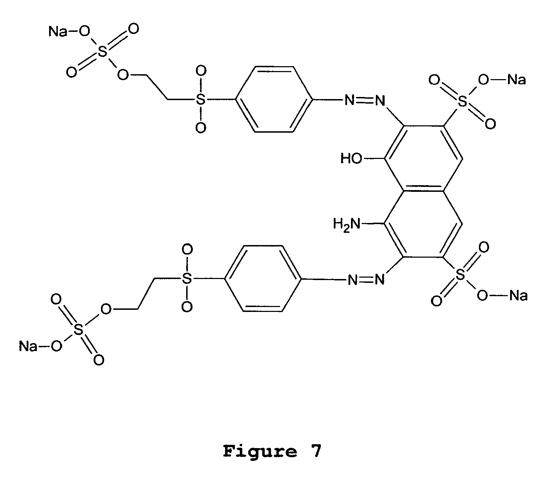

In order to test the characteristics of the fibre-based support product, the impregnated fibre-based support was submerged in a known reactive black 5 solution (CAS: 17095-24-8), whose chemical formula is illustrated in figure 7, together with a known solution of a washing machine liquid detergent.

### Preparing washing machine liquid detergent:

The liquid detergent has the formulation indicated in table 1.

**Table 1.**

| **Component** | **Percentage** |
|---|---|
| Water | 79.2% |
| sodium dodecylbenzenesulfonate | 8% |
| sodium laureth sulfate | 3.5% |
| cocamide dea | 2% |
| potassium cocoate | 1.5% |
| potassium oleate | 1.5% |
| Cocamidopropyl Betaine | 3% |
| C1214 etho-propoxylate | 1% |
| laureth-7 | 0.3% |

### Preparing dyed solution with reactive black 5 (dye 55%) :

0.06 gr of dye were dissolved in 1000 ml of water, the dye was hydrolyzed by adding alkali at 60°C for thirty minutes; the solution was then cooled to 25°C and the pH was neutralised by adding acetic acid.

### Test:

Next follows the use of the previously prepared dyed solution and addition of 1 gr/L of liquid detergent thereto; once heated to 40°C the solution is ready for the introduction of the nonwoven fabric support weighing 1 gram produced according to example IV together with a white cotton test specimen.

Through constant stirring of the solution, the samples were extracted after 2 hours and the captured dye was determined through spectrophotometry reading.

ΔE indicates the intensity difference of the captured dye between the test specimen before and after the test.
The results are indicated in table 2.

**Table 2.**

| | **FIBRE-BASED SUPPORT IMPREGNATED WITH E1 or E2** | **WHITE COTTON TEST SPECIMENT** |
|---|---|---|
| TIME 0 | ΔE = 0 | ΔE = 0 |
| TIME 30 MIN | ΔE > 40 | ΔE = 0 - 0.5 |
| TIME 120 MIN | ΔE > 40 | ΔE = 0 - 0.5 |

### Bactericidal test

Regarding the need to test the bacterial reduction due to the fibre-based support made of nonwoven fabric impregnated with polymer product D2 (example IV) a test was carried out in compliance with the ASTM E 2149-01 standards.

The ASTM 2149-01 standard was set to evaluate the efficiency of an antimicrobial treatment of textile surfaces, where the biocidal chemical agent is attached thereto.

The process provides for constant stirring of the textile substrate to be tested (dynamic shake) in a bacterial solution with known concentration.

The tests to be performed are essentially three.
The first provides for the dynamic contact with the bacterial solution of an untreated textile substrate, the second provides for the dynamic contact with the bacterial solution of the textile substrate treated with the biocidal polymer to be tested, while the third one is a control of the environment of the bacterial solution without substrate (negative control). The results indicate the bacteria culture reduction percentages resulting from the three tests.

### PREPARATION

A standard bacterial solution at the concentration of 10⁵ Ufc/ml starting from a massive bacterial solution of 10³ Ufc/ml of a known bacterial strain, Staphylococcus Aureus in this case, is prepared initially. Eppendorf test tubes containing a standard bacterial strain to be used in the research are prepared.

1 gram of the textile substrate treated with biocidal polymer and 1 gram of untreated textile substrate was analysed.

1 gr/L of the liquid detergent, whose composition is indicated in table 1, was added to the standard bacterial solution in order to reproduce the use conditions of the textile substrate treated with the biocidal polymer in an environment for washing textile articles.

During the step of dynamic contact between the treated or untreated surface and the bacterial solution, the temperature was set at 25 °C over the entire period of analysis.

### PROCESS

### 1. Use of the fibre-based support made of nonwoven fabric impregnated with polymer product D2

50 ml of buffer with bacteria at 10⁵ Ufc/ml
Measurement at zero time (T0)
Measurement after 1 hour (T1)
Measurement after 24 hours (T4)

### 2. Use of a fabric made of cellulose and polyester bound to acrylic ligands (TEST)

50 ml of buffer with bacteria at 10⁵ Ufc/ml
Measurement at zero time (T0)
Measurement after 1 hour (T1)
Measurement after 24 hours (T4)

### 3. NEGATIVE CONTROL (only cell culture)

50 ml of buffer with bacteria at 10⁵ Ufc/ml
Measurement at zero time (T0)
Measurement after 1 hour (T1)
Measurement after 24 hours (T4)

Bacterial reduction was proven even only after one hour of dynamic contact with reduction exceeding 90% with respect to the reference, (test fabric).

**Table 3.**

| | **TREATED NONWOVEN FABRIC** | **UNTREATED NONWOVEN FABRIC** | **BUFFER CONTROL** |
|---|---|---|---|
| TO | 1.0 * 10⁶ Ufc/ml | 1.0 * 10⁶ Ufc/ml | 1.0 * 10⁶ Ufc/ml |
| T1 | 4.0 * 10³ Ufc/ml | 2.0 * 10⁶ Ufc/ml | 2.0 * 10⁶ Ufc/ml |
| T4 | 1.0 * 10¹ Ufc/ml | 3.0 * 10⁶ Ufc/ml | 1.5 * 10⁶ Ufc/ml |

A bacterial reduction percentage equivalent to 0% at T0, 99.9% at T1 and 100% at T4 is obtained with the substrate of nonwoven fabric treated with compound D2.

Obviously, without prejudice to the underlying principle of the invention, the details and embodiments may vary, even significantly, with respect to what has been described herein by way of example only, without departing from the scope of the present invention.

## Claims

1. Polymer of formula (I): 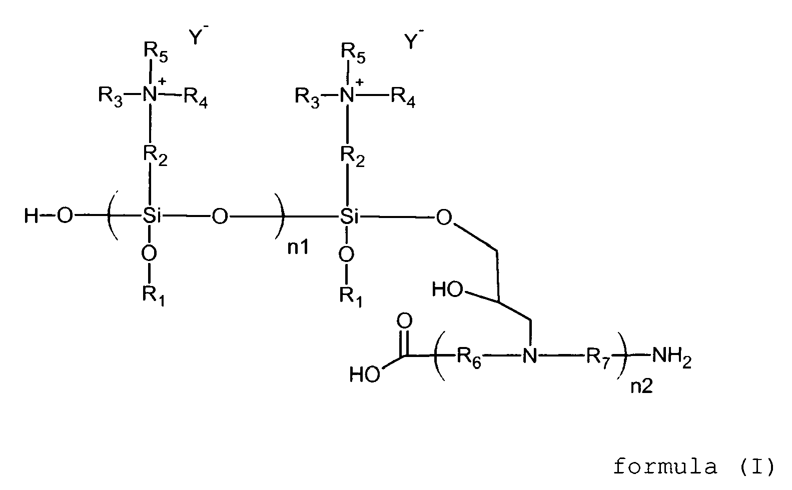 wherein:
R₁ is selected from among hydrogen, a methyl, ethyl, or acetyl group;
R₂ is selected from among linear or branched alkyl groups C₁₋₆;
R₃ and R₄ are selected from among, independently from each other, linear or branched alkyl groups C₁₋₃;
R₅ is selected from among linear or branched alkyl or alkenyl groups C₁₋₂₂, substituted or unsubstituted;
R₆ and R₇ are selected from among, independently from each other, linear or branched alkyl or alkenyl groups C₄₋₂₀, containing within the alkyl or alkenyl chain at least one group selected from among -HN-(CO)-, -NH-, - N⁺-;
Y⁻ is selected from among a chloride, bromide, sulphate, or sulfonate;
n1 has a value comprised between 1 and 1000;
n2 has a value comprised between 1 and 1000.

2. Polymer according to claim 1, wherein:
R₁ is selected from among hydrogen or methyl;
R₂ is selected from among ethyl, propyl, butyl, t-butyl, iso-butyl;
R₃ and R₄ are selected from among, independently from each other, methyl and ethyl;
R₅ is a linear or branched group C₄₋₂₂, substituted or unsubstituted;
R₆ is selected from among linear or branched alkyl or alkenyl groups C₁₀₋₂₀, containing within the alkylic or alkenylic chain at least one group selected from among -HN-(CO)-, -NH-, -N⁺-;
R₇ is selected from among linear or branched alkyl or alkenyl groups C₄₋₁₀, containing within the alkyl or alkenyl chain at least one group selected from among -HN-(CO)-, -NH-, -N⁺-;
Y⁻ is chloride;
n1 is comprised between 1 and 100;
n2 is comprised between 1 and 100.

3. Polymer according to claim 2, wherein:
R₁ is hydrogen,
R₂ is propyl;
R₃ and R₄ are methyl;
R₅ is an unsubstituted linear alkyl group C₁₆,
R₆ is -(CH₂)₄-N⁺-(CH₂)₄-NH-CO-(CH₂)₄-;
R₇ is - (CH₂)₄-;
n1 is comprised between 10 and 100;
n2 is comprised between 10 and 100.

4. Fibre-based support containing free hydroxyl groups and at least i) one polymer according to any one of claims 1 to 3 or ii) one copolymer containing a polymer according to any one of claims 1 to 3, said at least one polymer and/or copolymer being conjugated to at least one of said free hydroxyl groups.

5. Support according to claim 4, wherein said support is in form of fabric, nonwoven fabric, loose fibres, yarn.

6. Support according to claim 4 or 5, wherein said support comprises natural and/or artificial fibres.

7. Support according to claim 6, wherein said natural and/or artificial fibres are in an amount comprised between 10 and 90%, preferably between 70 and 90%.

8. Support according to any one of claims 4 to 7, wherein said support further comprises synthetic fibres.

9. Use of at least one polymer according to any one of claims 1 to 3, of a copolymer containing a polymer according to any one of claims 1 to 3 and/or of a support according to any one of claims 4 to 8 for capturing dyes dispersed in an aqueous environment.

10. Use according to claim 9, wherein said dyes are textile dyes.

11. Use according to claim 9 or 10, wherein said polymers and/or said support are used during a step of washing dyed textile articles in an aqueous environment.

12. Use of at least one polymer according to any one of claims 1 to 3, a copolymer containing a polymer according to any one of claims 1 to 3 and/or a support according to any one of claims 4 to 8 as an antibacterial agent in a step of washing textile articles in an aqueous environment.

13. Process for producing a support according to any one of claims 4 to 8, comprising the operations of:
a) providing fibres containing free hydroxyl groups;
b) carding said fibres obtaining at least one layer of carded fibres;
c) impregnating said layer of carded fibres with a polymer-based solution according to any one of claims 1 to 3 and/or a copolymer containing a polymer according to any one of claims 1 to 3.

14. Process according to claim 13, wherein the impregnation step c) is carried out under conditions of depression.

15. Process according to claim 13 or 14, wherein an operation d) of drying said impregnated layer is carried out at the end of the impregnation step.

## Patentansprüche

1. Polymer der Formel (I): 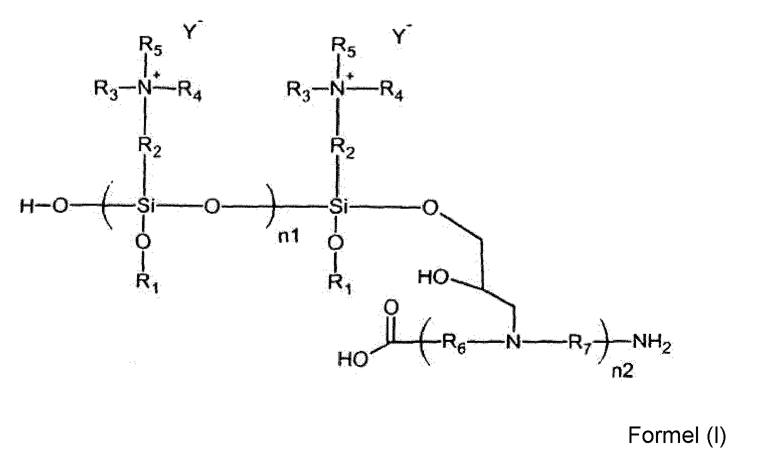 worin:
R₁ ist ausgewählt aus Wasserstoff, einer Methyl-, Ethyl- oder Acetylgruppe;
R₂ ist ausgewählt aus linearen oder verzweigten C₁₋₆-Alkylgruppen;
R₃ und R₄ sind unabhängig voneinander ausgewählt aus linearen oder verzweigten C₁₋₃-Alkylgruppen;
R₅ ist ausgewählt aus substituierten oder unsubstituierten, linearen oder verzweigten C₁₋₂₂-Alkyl- oder Alkenylgruppen;
R₆ und R₇ sind unabhängig voneinander ausgewählt aus linearen oder verzweigten C₄₋₂₀-Alkyl- oder Alkenylgruppen, die innerhalb der Alkyl- oder Alkenylkette wenigstens eine Gruppe, ausgewählt aus -HN-(CO)-, -NH-, -N⁺-, enthalten;
Y⁻ ist ausgewählt aus einem Chlorid, Bromid, Sulfat oder Sulfonat;
n1 hat einen Wert zwischen 1 und 1000;
n2 hat einen Wert zwischen 1 und 1000.

2. Polymer nach Anspruch 1, worin:
R₁ ist ausgewählt aus Wasserstoff oder Methyl;
R₂ ist ausgewählt aus Ethyl, Propyl, Butyl, t-Butyl, Iso-butyl;
R₃ und R₄ sind unabhängig voneinander ausgewählt aus Methyl und Ethyl;
R₅ ist eine substituierte oder unsubstituierte, lineare oder verzweigte C₄₋₂₂-Gruppe;
R₆ ist ausgewählt aus linearen oder verzweigten C₁₀₋₂₀-Alkyl- oder Alkenylgruppen, die innerhalb der Alkyl- oder Alkenylkette wenigstens eine Gruppe, ausgewählt aus -HN-(CO)-, -NH-, -N⁺-, enthalten;
R₇ ist ausgewählt aus linearen oder verzweigten C₄₋₁₀-Alkyl- oder Alkenylgruppen, die innerhalb der Alkyl- oder Alkenylkette wenigstens eine Gruppe, ausgewählt aus -HN-(CO)-, -NH-, -N⁺-, enthalten;
Y⁻ ist Chlorid;
n1 beträgt zwischen 1 und 100;
n2 beträgt zwischen 1 und 100.

3. Polymer nach Anspruch 2, worin:
R₁ ist Wasserstoff,
R₂ ist Propyl;
R₃ und R₄ sind Methyl;
R₅ ist eine unsubstituierte lineare C₁₆-Alkylgruppe,
R₆ ist -(CH₂)₄-N⁺-(CH₂)₄-NH-CO-(CH₂)₄-;
R₇ ist -(CH₂)₄-;
n1 beträgt zwischen 10 und 100;
n2 beträgt zwischen 10 und 100.

4. Träger auf Faserbasis enthaltend freie Hydroxylgruppen und wenigstens i) ein Polymer nach einem der Ansprüche 1 bis 3 oder ii) ein Copolymer enthaltend ein Polymer nach einem der Ansprüche 1 bis 3, wobei das wenigstens eine Polymer und/oder Copolymer an wenigstens eine der freien Hydroxylgruppen konjugiert ist.

5. Träger nach Anspruch 4, wobei der Träger in Form eines Gewebes, Faservlieses, loser Fasern, Garns vorliegt.

6. Träger nach Anspruch 4 oder 5, wobei der Träger Naturfasern und/oder Kunstfasern umfasst.

7. Träger nach Anspruch 6, wobei die Naturfasern und/oder Kunstfasern in einer Menge zwischen 10 und 90 %, vorzugsweise zwischen 70 und 90 % vorliegen.

8. Träger nach einem der Ansprüche 4 bis 7, wobei der Träger außerdem synthetische Fasern umfasst.

9. Verwendung von wenigstens einem Polymer nach einem der Ansprüche 1 bis 3, von einem Copolymer enthaltend ein Polymer nach einem der Ansprüche 1 bis 3 und/oder von einem Träger nach einem der Ansprüche 4 bis 8 zum Einfangen von Farbstoffen, die in einer wässrigen Umgebung dispergiert sind.

10. Verwendung nach Anspruch 9, wobei die Farbstoffe Textilfarbstoffe sind.

11. Verwendung nach Anspruch 9 oder 10, wobei die Polymere und/oder der Träger während eines Schrittes des Waschens von gefärbten Textilartikeln in einer wässrigen Umgebung verwendet werden.

12. Verwendung von wenigstens einem Polymer nach einem der Ansprüche 1 bis 3, einem Copolymer enthaltend ein Polymer nach einem der Ansprüche 1 bis 3 und/oder einem Träger nach einem der Ansprüche 4 bis 8 als antibakterieller Wirkstoff in einem Schritt des Waschens von Textilartikeln in einer wässrigen Umgebung.

13. Verfahren zum Herstellen eines Trägers nach einem der Ansprüche 4 bis 8, umfassend die Arbeitsschritte:
a) Bereitstellen von Fasern, die freie Hydroxylgruppen enthalten;
b) Kardieren der Fasern, wobei wenigstens eine Schicht aus kardierten Fasern erhalten wird;
c) Imprägnieren der Schicht aus kardierten Fasern mit einer Lösung auf Polymerbasis nach einem der Ansprüche 1 bis 3 und/oder einem Copolymer enthaltend ein Polymer nach einem der Ansprüche 1 bis 3.

14. Verfahren nach Anspruch 13, wobei der Imprägnierungsschritt c) unter den Bedingungen eines Unterdrucks (depression) durchgeführt wird.

15. Verfahren nach Anspruch 13 oder 14, wobei ein Arbeitsgang d) des Trocknens der imprägnierten Schicht am Ende des Imprägnierungsschrittes ausgeführt wird.

## Revendications

1. Polymère de formule (I) : 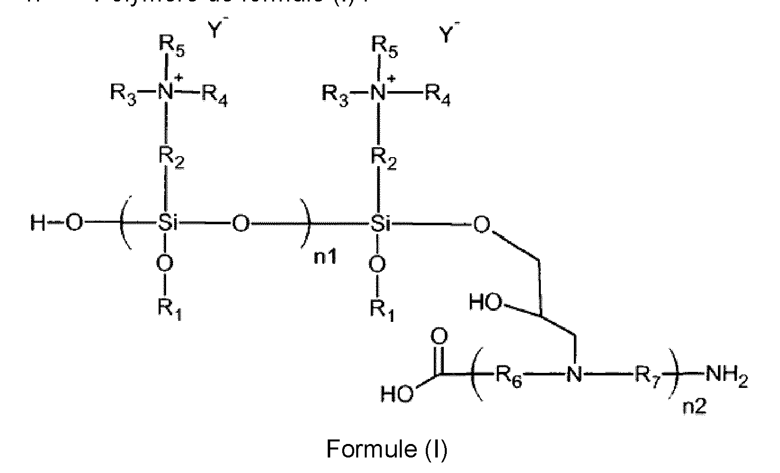 dans laquelle :
R₁ est choisi parmi l'hydrogène et les groupes méthyle, éthyle et acétyle ;
R₂ est choisi parmi les groupes alkyle linéaires ou ramifiés en C₁ à C₆ ;
R₃ et R₄, indépendamment l'un de l'autre, sont choisis parmi les groupes alkyle linéaires ou ramifiés en C₁ à C₃ ;
R₅ est choisi parmi les groupes alkyle et alcényle linéaires ou ramifiés en C₁ à C₂₂, substitués ou non substitués ;
R₆ et R₇, indépendamment l'un de l'autre, sont choisis parmi les groupes alkyle et alcényle linéaires ou ramifiés en C₄ à C₂₀ contenant, à l'intérieur de la chaîne alkyle ou alcényle, au moins un groupe choisi parmi -HN-(CO)-, -NH-, -N⁺- ;
Y⁻ est choisi parmi un chlorure, un bromure, un sulfate et un sulfonate ;
n1 a une valeur comprise entre 1 et 1000 ;
n2 a une valeur comprise entre 1 et 1000.

2. Polymère selon la revendication 1, dans lequel :
R₁ est choisi parmi l'hydrogène et méthyle ;
R₂ est choisi parmi éthyle, propyle, butyle, t-butyle, isobutyle ;
R₃ et R₄, indépendamment l'un de l'autre, sont choisis parmi méthyle et éthyle ;
R₅ est un groupe en C₄ à C₂₂ linéaire ou ramifié, substitué ou non substitué ;
R₆ est choisi parmi les groupes alkyle et alcényle linéaires ou ramifiés en C₁₀ à C₂₀ contenant, à l'intérieur de la chaîne alkylique ou alcénylique, au moins un groupe choisi parmi -HN-(CO)-, -NH-, -N⁺- ;
R₇ est choisi parmi les groupes alkyle et alcényle linéaires ou ramifiés en C₄ à C₁₀ contenant, à l'intérieur de la chaîne alkyle ou alcényle, au moins un groupe choisi parmi -HN-(CO)-, -NH-, -N⁺- ;
Y⁻ est le chlorure ;
n1 est compris entre 1 et 100 ;
n2 est compris entre 1 et 100.

3. Polymère selon la revendication 2, dans lequel :
R₁ est l'hydrogène ;
R₂ est propyle ;
R₃ et R₄ sont méthyle ;
R₅ est un groupe alkyle en C₁₆ linéaire non substitué ;
R₆ est -(CH₂)₄-N⁺-(CH₂)₄-NH-CO-(CH₂)₄- ;
R₇ est -(CH₂)₄-;
n1 est compris entre 10 et 100 ;
n2 est compris entre 10 et 100.

4. Support à base de fibres contenant des groupes hydroxyle libres et au moins i) un polymère selon l'une quelconque des revendications 1 à 3 ou (ii) un copolymère contenant un polymère selon l'une quelconque des revendications 1 à 3, ledit au moins un polymère et/ou copolymère étant conjugué à au moins l'un desdits groupes hydroxyle libre.

5. Support selon la revendication 4, dans lequel ledit support est sous la forme d'une étoffe, d'une étoffe non-tissée, de fibres lâches, d'un fil.

6. Support selon la revendication 4 ou 5, lequel support comprend des fibres naturelles et/ou artificielles.

7. Support selon la revendication 6, dans lequel lesdites fibres naturelles et/ou artificielles sont présentes en une quantité comprise entre 10 et 90 %, de préférence entre 70 et 90 %.

8. Support selon l'une quelconque des revendications 4 à 7, lequel support comprend en outre des fibres synthétiques.

9. Utilisation d'au moins un polymère selon l'une quelconque des revendications 1 à 3, d'un copolymère contenant un polymère selon l'une quelconque des revendications 1 à 3 et/ou d'un support selon l'une quelconque des revendications 4 à 8, pour la capture de colorants dispersés dans un environnement aqueux.

10. Utilisation selon la revendication 9, dans laquelle lesdits colorants sont des colorants textiles.

11. Utilisation selon la revendication 9 ou 10, dans laquelle lesdits polymères et/ou ledit support sont utilisés durant une étape de lavage d'articles textiles teints dans un environnement aqueux.

12. Utilisation d'au moins un polymère selon l'une quelconque des revendications 1 à 3, d'un copolymère contenant un polymère selon l'une quelconque des revendications 1 à 3 et/ou d'un support selon l'une quelconque des revendications 4 à 8, en tant qu'agent antibactérien dans une étape de lavage d'articles textiles dans un environnement aqueux.

13. Procédé pour produire un support selon l'une quelconque des revendications 4 à 8, comprenant les opérations consistant à :
a) disposer de fibres contenant des groupes hydroxyle libre ;
b) carder lesdites fibres en obtenant au moins une couche de fibres cardées ;
c) imprégner ladite couche de fibres cardées avec une solution à base de polymère selon l'une quelconque des revendications 1 à 3 et/ou un copolymère contenant un polymère selon l'une quelconque des revendications 1 à 3.

14. Procédé selon la revendication 13, dans lequel l'étape d'imprégnation c) est mise en oeuvre dans des conditions de dépression.

15. Procédé selon la revendication 13 ou 14, dans lequel une opération d) consistant à sécher ladite couche imprégnée est mise en oeuvre à la fin de l'étape d'imprégnation.
